# EUROPEAN PATENT SPECIFICATION

(11) **EP 3 141 414 B1**
(45) Date of publication and mention of the grant of the patent: **22.05.2019**
(21) Application number: 15184319.0
(22) Date of filing: 08.09.2015
(51) Int. Cl.: B60K 37/02, B60K 37/04, B60R 11/00

(54) **ACCESSORY MODULE FOR INSTRUMENT CLUSTER**
ZUSATZMODUL FÜR EINEN INSTRUMENTCLUSTER
MODULE ACCESSOIRE DE GROUPE D'INSTRUMENTS

(43) Date of publication of application: 15.03.2017
(73) Proprietor: Aptiv Technologies Limited, St. Michael (BB)
(72) Inventor: Reischl, Erik, 55765 Birkenfeld (DE); Breckheimer, Frank, 55425 Waldalgesheim (DE); Mühle, Ute, 55411 Bingen (DE)
(74) Representative: Robert, Vincent

(56) References cited:
- EP-A1- 2 460 681
- WO-A1-2010/114370
- DE-U1-202013 005 454

## Description

The present invention relates to an accessory module for an instrument cluster.

Instrument clusters are, for example, used in cars to indicate a plurality of information, in particular about operating conditions of the car. Especially, an instrument cluster usually comprises a speedometer, a tachometer, an odometer, a cooling temperature gauge, a fuel gauge and/or several tell-tales. In most common instrument clusters analog gauges and indicator lights are used.

Recently, however, electronic instrument clusters are increasingly being used for to their greater versatility. An electronic instrument cluster can, for example, comprise a display unit as a digital readout on which different virtual gauges can be displayed simultaneously or interchangeably. In contrast to analog indicators with needles and lamps, on an electronic display even moving graphical information, as for example live map, data can be visualized. Furthermore, an electronic instrument cluster is customizable to varying needs and preferences.

To further enhance the functionality of an instrument cluster, additional functional elements, as for example assistance systems, can be modularly connected to the cluster. For example, a camera module can be provided for surveillance of a car driver's concentration. Especially, by optical capture of eye blinking frequencies or eye closures, dangerous momentary nodding off (micro-sleep) can be detected and indicated by an alert. A micro-sleep surveillance system as described requires positioning of the camera module such that its camera (and possibly also an IR light source for unobtrusive illumination of the driver even at night) has full view on the driver's face. For this purpose as well as for other applications, there may be a need to place one or more respective accessory modules in the proximity of the cluster which is typically situated in the driver's field of vision.

However, since the instrument cluster usually takes up most of the space provided for information display (i.e. most of the visible space behind the steering wheel and below the windshield), there is barely any space left for an accessory module. It may therefore be necessary that the accessory module is directly attached to the cluster, possibly even overlapping at least partly a (preferably small) area of the cluster. The cluster, however, may usually not be designed to be generally well suited as a support for an accessory module. Especially, a display screen of a display unit of the cluster may be susceptible to damage if it is subjected to excessive pressure.

Therefore, on the one hand, a mounting mechanism for an accessory module has to take into account the fragility of the cluster or at least of parts of the cluster like said display unit. On the other hand, however, the accessory module has to be securely and rigidly mounted so as not to be loosened by thrust or vibrations. Especially, attachment has to be tight enough to prevent rattling and clatter between the accessory module and the cluster, preferably over the full lifetime of a car. Furthermore, since the accessory module might be optional to the cluster, the accessory module is not necessarily attached to the cluster from the outset. It is therefore important that the accessory module can be easily affixed to the cluster as a later add-on. Preferably the attachment is also reversible.

Document WO 2010/114370 A1, which discloses the preamble of claim 1, relates to a navigation system for use in a vehicle comprising a navigation apparatus as well as coupling means for coupling the navigation apparatus to the vehicle, which coupling means comprise holding means to which the navigation apparatus is connected, as well as securing means for securing the holding means to the vehicle. Document EP 2 460 681 A1 relates to driver consoles for use in a utility vehicle cab having a rotatable driver station. Document DE 20 2013 005454 U1 relates to a clamping device for holding hangers, wind deflectors, computer equipment or the like.

Hence, it is an objective of the invention to provide an accessory module for an instrument cluster as well as an instrument cluster assembly comprising an instrument cluster and an accessory module therefor, with the accessory module being mountable to the instrument cluster in a gentle, precise, secure and preferentially reversible manner.

This objective is solved by an accessory module in accordance with claim 1 and in particular by that the accessory module comprises a first part and a second part hingedly connected to the first part so as to be pivotable relative to the first part around a pivot axis between an open position and a closed position, wherein in the open position a contact surface of the second part is spaced apart from a contact surface of the first part such that the accessory module can be mounted to the cluster with the contact surface of the first part being supported against, in particular lying flat against, a first face of the cluster, wherein in the closed position the contact surface of the second part is forced towards the contact surface of the first part so as to clamp the cluster in between the first part and the second part, wherein the open position and the closed position are separated by a dead center, and wherein the first part comprises a functional unit, in particular a camera, and the second part comprises an electronic control unit for the functional unit, or vice versa.

In other words, the accessory module has not a rigid structure as a whole, but comprises two separate parts pivotably moveable relative to each other by a hinged connection. In this way, the accessory module can first be loosely placed on the cluster and then, by changing its configuration from the open position to the closed position of the second part, be securely affixed to the cluster. By this, a simple and effective mounting mechanism is provided which generally eliminates the need for fastening elements such as screws.

Preferably, said first part is a front part of the accessory module, with said second part, consequently, being a back part of the accessory module. Then, first the front part of the accessory module may be laid against a front face of the cluster (corresponding to said first face of the cluster) and subsequently the back part is pivoted into the closed position to clamp the cluster in between. However, it is generally also possible that it is the front part of the accessory module which is pivoted into the closed position after the back part has been put against a (back) face of the cluster.

Contrary to the closed position which is clearly defined (at least relatively to the cluster being clamped in between the first and second parts in the closed position), the open position can refer to any pivot position of the second part in which the accessory module can (initially without clamping) be mounted to the cluster due to the spacing between the first and the back parts' contact surfaces. This may be possible within a certain range of pivot positions of the second part. Therefore, said open position can also refer to such a range.

In the closed position, the second part is forced towards the contact surface of the first part. Mounting of the accessory module, thus, corresponds to clamping the cluster in between the first part and second part of the accessory module. By such a clamping, tolerances between the cluster and the accessory module can be advantageously compensated. Furthermore, clamping has the advantage that forces are applied to the cluster from both of its sides, whereas if for example the accessory module is fixed to the cluster simply by screws, a respective screw produces forces only on the side of the cluster the screw is screwed in.

The clamping forces result in particular from the hinged connection between the first part and the second part and especially from the open position of the second part being separated from the closed position by a dead center.

The dead center defines a position along the range of pivotability of the second part on both sides of which the second part is forced away therefrom. Hence, on the closed position side of the dead center the second part is forced towards its closed position, preferably up until the closed position is reached and beyond. Conversely, on the open position side of the dead center the second part is forced towards its open position, though the force may be decreased to zero before the open position is reached such that subsequently the second part is freely pivotable.

Separating the open position and the closed position by a dead center thus not only secures the second part in its closed position against inadvertent opening, but also results in forcing the second part towards the contact surface of the first part. This force enables a tight fit of the accessory module with both its first and second parts holding the cluster clamped in between. The amount of clamping force applied to the cluster due to said clamping can be precisely defined by the dimensions of the accessory module's parts relative to the thickness of the clamped section of the cluster and especially by appropriate design of the dead center mechanism.

In particular, the direction of force application can at least essentially be defined by the line connecting the pivot axis and the dead center. Furthermore, the accessory module can be adapted such that force application to the cluster occurs through a region of said first face of the cluster which is specially suited for supporting the accessory module. For example, if the first face comprises a spacing projection acting as abutment for the first part of the module (as described in more detail below), the clamping forces exerted to the cluster by the accessory module preferentially run through this spacing projection.

When the second part is in the closed position, the contact surface of the first part and the contact surface of the second part preferably are at least essentially aligned in parallel, with the clamping force between the contact surfaces preferentially interacting perpendicularly on corresponding faces of the cluster. In this way, the clamping force can be applied evenly to respective contact areas formed between the contact surfaces of the first and second parts of the accessory module and the faces of the cluster. This leads to a reliable mounting of the accessory module while preventing torque and distributing the overall load across a large area to prevent punctual overload on the cluster. In order to additionally prevent slippage of the accessory module from the cluster, the contact surfaces of the accessory module can be rubberized, have a non-slip coating or have an otherwise increased static friction.

In a preferred embodiment, the contact surface of the first part and the contact surface of the second part are parallel to the pivot axis. Especially, the pivot axis can be aligned such that, when the first part of the accessory module is attached to the cluster, the pivot axis extends in parallel with a rim of the cluster to which the accessory module is mounted. This contributes to that pivoting of the second part relative to the first part results in gripping around said rim for a secure clamping of the cluster.

In particular, the first part can comprise a main body and a rear protrusion with the second part being hingedly connected to the rear protrusion. The rear protrusion can for example extend from an edge region of the main body and/or be angled with respect to a longitudinal extension of the main body. Especially, the rear protrusion extends perpendicular to said contact surface of the first part. Since the second part is hingedly connected to the rear protrusion, the rear protrusion can be regarded as link between the main body of the first part and the back part. As such, the rear protrusion is preferably adapted to grip over said rim of the cluster.

In this way, in the open position of its second part, the accessory module can be hooked to the cluster with the main body of its first part supported against said first face of the cluster and the rear protrusion gripping around said rim of the cluster. While the structure of the main body and the rear protrusion may be specially adapted to match the cluster, such simple hooking would not be tight and secure enough. Therefore, this initially only preliminary mounting can subsequently be completed by pivoting the second part into the closed position.

Preferentially, the pivot axis intersects the rear protrusion of the first part at a distal end of the rear protrusion with respect to the main body of the first part. Hence, when the first part is attached to the cluster, its main body, which is supported at the first face of the cluster, and said distal end of its rear protrusion, which grips over the rim of the cluster, are arranged on opposite sides of the cluster. Therefore pivoting of the second part can take place entirely on the opposite side of the cluster with respect to the first part.

Furthermore, the pivot axis can be situated opposite the contact surface of the first part. In particular, the pivot axis can be situated opposite a margin region of the contact surface adjacent to where the rear protrusion extends from, with this margin region preferably extending over less than half the extension of the contact surface in a direction away from the rear protrusion. In such an embodiment, the cluster can be received between the pivot axis and said contact surface of the first part of the accessory module. This can contribute to a secure mounting by directly opposing forces applied to both sides of the cluster.

Instead of a single rear protrusion the first part of the accessory module can also comprise multiple rear protrusions. These are then preferably aligned in parallel, evenly distributed along the pivot axis and/or equally formed.

According to the invention, the first part of the accessory module comprises a functional unit, especially a camera, and the second part of the accessory module comprises an electronic control unit for the functional unit. Or, vice versa, the second part comprises a functional unit and the first part comprises an electronic control unit for the functional unit. By this, the division of the accessory module in separate first and second parts not only serves the described clamping mechanism, but is also a functional division. In particular, the part of the accessory module with the functional unit is adapted to be placed on a front side of the cluster. This is especially the case for a camera (and maybe an associated IR light source)

whose field of view shall lie in front of the cluster, for example to capture a driver's face as described above. However, in particular for reducing the visibility of the accessory module from the outside and for reducing the overlap of the accessory module with a display area at a front face of the cluster, at least the electronic control unit (preferentially as much as possible) of the accessory module is hidden from view by being placed on the back side of the cluster in the back part of the accessory module.

In a further preferred embodiment, the second part of the accessory module comprises a tightening surface adjoining the contact surface of the second part along a tilt line parallel to the pivot axis, with the tightening surface being slanted with respect to said contact surface. In particular, the tightening surface is further from the pivot axis than said contact surface and slanted with respect to said contact surface in a pivot direction away from the closed position, wherein the slant angle is for example less than 10°, preferably less than 5°, more preferably 3°. Thus, if in the closed position the contact surface of the second part lies flat against a second face (in particular, a back face) of the cluster, there remains at least a slight gap between the tightening surface and said second face. Therefore, by forcing the tightening surface towards the second face, torque around said tilt line is generated which forces the hinged connection of the first and second parts of the module in a direction away from the contact surface of the first part. This further improves and tightens the clamping of the module to the cluster, as the contact surface of the first part is more vigorously pressed against the first face of the cluster. Forcing the tightening surface of the second part against the cluster can for example be achieved by means of a screw which also allows adjusting the tightening force by changing the screwing depth.

According to a preferred embodiment, the second part comprises a main body and at least one cam member extending radially with respect to the pivot axis from the main body to engage an associated cam guide. Since the cam member extends radially to the pivot axis, its radial tip (i.e. the end of the cam member farthest from the pivot axis; this can be a point, an edge or a face) follows a course around the pivot axis, when the second part of the accessory module is pivoted around the axis. In doing so, the cam member, in particular its tip, can engage said cam guide. By this engagement, positioning of the accessory module can be defined axially with respect to the pivot axis.

Engagement of the cam member and the cam guide can occur within the full range of pivoting between the open position and the closed position of the second part of the accessory module, but this is not necessary. Preferably engagement at least occurs within a continuous range comprising the dead center and the closed position.

The second part can comprise multiple, especially equally formed and/or parallel, cam members, preferably with individual cam guides associated to each of the cam members. In this way, interaction forces between the cam members and the cam guides can be distributed along the pivot axis resulting in more precisely guided movement of the cam member. The number of cam members of the second part can in particular correspond to the number of rear protrusions of the first part of the accessory module. If the second part comprises at least two cam members, two of the cam members are preferably situated at opposite sides of the second part of the accessory module along the pivot axis for optimal stabilization of the accessory module on the cluster.

The second part comprises in particular two cam members. In this case the first and second parts of the accessory module, which comprise a functional unit and an electronic control unit, respectively, as described above, preferably are electronically connected across their hinged connection in between the two cam members. In this way, the electronic connection can be laterally protected by the flanking cam members.

In a preferred embodiment, the cam member (or at least one of the cam members) is adapted to resiliently slide along the (respective) associated cam guide, when the second part is pivoted between the open position and the closed position. Especially a radial tip of the cam member lies against or is forced against the cam guide and moves along the guide in circumferential direction with respect to the pivot axis during pivoting. It is in particular by this cooperation of the cam member and the cam guide that said dead center of the second part's pivoting can be realized.

Resiliency of the cam member can be due to an elastic material of the cam member. However, it is preferred that the cam member is resilient at least essentially only in radial direction, but not in circumferential direction, to ensure a clear correspondence between a pivot position of the second part of the accessory module and the respective point of contact between the cam member and the cam guide. To this purpose the cam member can, for example, have an at least essentially U-shaped cross-section with the bottom of the U-shape forming a radial tip of the cam member. Especially, the cam member can be connected to the main body of the second part of the accessory module by one of the legs of this U-shape, while the other leg may be free. A force exerted from the cam guide to the tip of the cam member might then deform the U-shape in a way such that the free leg is shifted with respect to the other leg, thus radially shortening the cam member against a restoring force.

Furthermore, the cam member preferably comprises a damping member enclosed within the U-shape of the cam member. This damping member can advantageously contribute to said restoring force after deformation of the U-shape, since the deformation can at the same time also affect the damping member. Additionally, the damping member can protect the cam member from breakage by absorbing part of the force exerted to the U-shape.

In a preferred embodiment, when the accessory module is mounted to the cluster, the cam guide is adapted to run in a circumferential direction with respect to the pivot axis having a varying radius with a minimal radius at a point corresponding to the dead center and a greater radius at a point corresponding to the closed position of the second part. In other words, the cam guide has a circumferential course along which the associated cam member can slide, but the radius of this course varies. Advantageously, this can lead to a force acting radially between the cam guide and the cam member with the amount of force depending on the respective radius of the cam guide.

At the dead center the radius of the cam guide is, at least locally, minimal. This means that on both sides of the dead center the radius increases, causing the radial force acting on the cam member to correspondingly decrease on both sides of the dead center. Hence, the functioning of the dead center can be a direct result of the varying radius.

In particular, the radius corresponding to the closed position - i.e. corresponding to the point of contact between the cam member and the cam guide, when the second part is in the closed position - is greater than the radius at the dead center, with the radius preferably monotonously increasing in between. However, the cam guide's radius at the closed position can still be smaller than the radius of the cam member (in its relaxed form), thus resulting in a force urging the cam member further in circumferential direction beyond the closed position. However, if in the closed position the cluster is clamped in between the first part and the second part of the accessory module, the second part cannot be moved beyond the closed position. Said remaining force is then advantageously redirected to a clamping force acting on the cluster for secure attachment of the accessory module.

The cam guide does not need to cover the entire pivot range of the second part of the accessory module. In particular, the cam guide can extend over an angular range around the pivot axis of about 80° to 100°, preferably of about 90°, comprising the dead center and the closed position. The angular distance between the dead center and the closed position thereby preferentially amounts to less than 30°, in particular less than 20°.

To provide one or more respective cam guides at a cluster the accessory module shall be mounted to, the accessory module preferentially comprises at least one guide member separate from said first and second parts, wherein the cam guide is formed in the guide member. This guide member is then adapted to be fixedly attached to the cluster prior to clamping of the accessory module to the cluster. The guide member can be regarded as auxiliary fitting bundled with the core accessory module. Before mounting the first and second parts of the accessory module to the cluster, the separate guide member may be fixed to the cluster, for example by screws, and then provides the cam guide for the cam member of the second part to interact with.

Alternatively, the cam guide can be formed, in particular integrally, in the cluster. Therefore, the objective of the invention is also solved by an instrument cluster assembly comprising an instrument cluster and an accessory module for this cluster, the accessory module according to any of the accessory modules described above, wherein the cam guide is formed in the cluster. In such an instrument cluster assembly, the cluster is specially adapted to support secure mounting of the accessory module by means of respective cam guides.

Independent of whether the cam guide is formed in the cluster or in a separate guide member, the instrument cluster of the instrument cluster assembly can have a first face which comprises a spacing projection against which the contact surface of the first part of the accessory module is supported, when the accessory module is mounted to the cluster. The first face is in particular a front face of the cluster. The spacing projection thus serves as an abutment for said contact surface of the accessory module. In particular, the spacing projection projects from the remaining first face of the cluster. In this way, contact and especially pressure of the contact surface to other areas of the first face of the cluster can be prevented.

In such an embodiment, it is especially preferred that the clamping forces exerted by the accessory module upon the cluster run through the spacing projection. In this way, the contact surface of the first part of the accessory module is pressed flat against the surface of the spacing projection without any resulting torque or tilting moment around an edge of the spacing projection. This leads to a stable attachment of the accessory module with a well-defined interaction area between the module and the instrument cluster. Additionally, the direction of force application is preferably perpendicular to the contact surface of the first part of the module and/or the abutment surface of the spacing projection to further enhance the clamping stability.

Said spacing projection can not only ensure that pressure is only applied to the spacing projection, but to no other areas of the first face of the cluster. The spacing projection also serves to precisely define the tolerance position of the accessory module mounted to the cluster which can be determined by the position of the spacing projection as well as by its extension. For example, the spacing projection can be arranged flush with an edge of the first face of the cluster and/or have an extension perpendicular to the first face of about 0.5 mm.

In particular, the instrument cluster of the instrument cluster assembly comprises a display unit, and said first face of the cluster comprises a display area of the display unit. In such an assembly, when the accessory module is mounted to the cluster, the first part of the accessory module can be spaced apart from the display area due to said spacing projection. In this way, the spacing projection can serve as a robust support for the accessory module and absorb the clamping force of the accessory module while at the same time protecting the display area from forces which could cause damage to the display unit.

In the following, the invention is exemplarily further described with reference to the Figures.

The Figures show four different stages of mounting an inventive accessory module to an instrument cluster, with each Figure showing schematically the same embodiments of the accessory module 25 and the cluster 11. Together, the accessory module 23 and the cluster 11 form an inventive instrument cluster assembly.

In the Figures, an upper part of an instrument cluster 11 is shown by side view. The cluster 11 comprises a display unit (not shown) with a display area 13 formed as a planar screen at a front face 15 of the cluster 11. The display area 13 is surrounded by a rim 17 of the cluster 11. In the region of the upper rim 17 a spacing projection 19 of the front face 15 projects forwards perpendicularly to the front face 15, thus forming an abutment 21 with a surface parallel offset to the display area 13. Opposite and parallel to the front face 15 is a planar back face 23 of the cluster 11.

An accessory module 25 is adapted to be mounted to the cluster 11. The accessory module 25 is a driver's concentration surveillance system and comprises a front part 27 and a back part 29 forming first and second parts 27, 29 of the accessory module 25, respectively.

The front part 27 has a main body 31 with a contact surface 33 to be supported against said abutment 21 of the cluster and a rear protrusion 35 extending rearwards. The rear protrusion 35 is mainly perpendicular to the contact surface 33 with an angled distal end 37. The form of the rear protrusion 35 is specifically adapted to match the rim 17 of the cluster 11. The main body 31 of the front part 27 comprises a functional unit with an IR LED and a camera (not shown) to illuminate and capture the area in front of the instrument cluster 11, respectively.

The back part 29 comprises a main body 39 with a contact surface 41 to be pivoted against the back face 23 of the cluster 11. The main body 39 of the back part 29 comprises an electronic control unit (not shown) for the functional unit of the front part 27. Thus the accessory module 25 is generally functionally independent of the cluster 11.

The front part 27 and the back part 29 are hingedly connected to each other for relative pivoting of the back part 29 around a pivot axis X. The pivot axis X intersects the front part 27 at the distal end 37 of the rear protrusion 35 and in an edge region of the back part 29. The function unit of the front part 27 and the electronic control unit of the back part 29 are electronically connected to each other across the hinged connection of the front and back parts 27, 29.

The back part 29 further comprises a cam member 43 essentially extending radially from the pivot axis X. The cam member 43 has an essentially U-shaped cross section with one of the legs of the U-shape being joint to the main body 39 and the other leg being free. The bottom of the U-shape forms a rounded radial tip 45 of the cam member 43, the tip 45 being defined by the apex of the U-shape farthest away from the pivot axis X. Therefore the distance of the tip 45 from the pivot axis X defines a radius of the cam member 43.

Between the legs of the U-shape of the cam member 43 there is a damping member 47 to support the free leg of the cam member 43 with respect to the joint leg. The damping member 47 preferably comprises an elastic material. Thus the free leg of the cam member 43 can shift with respect to the joint leg against a restoring force which results from the bending rigidity of the cam member 43 as well as the compression and shear of the damping member 47. By such a deformation of the cam member 43 its tip 45 can resiliently change its radial distance to the pivot axis X.

Affixed by screws to a side of the cluster 11 is a guide member 49. This guide member provides a curved surface which acts as a cam guide 51 for the cam member 43 of the back part 29 of the accessory module 25.

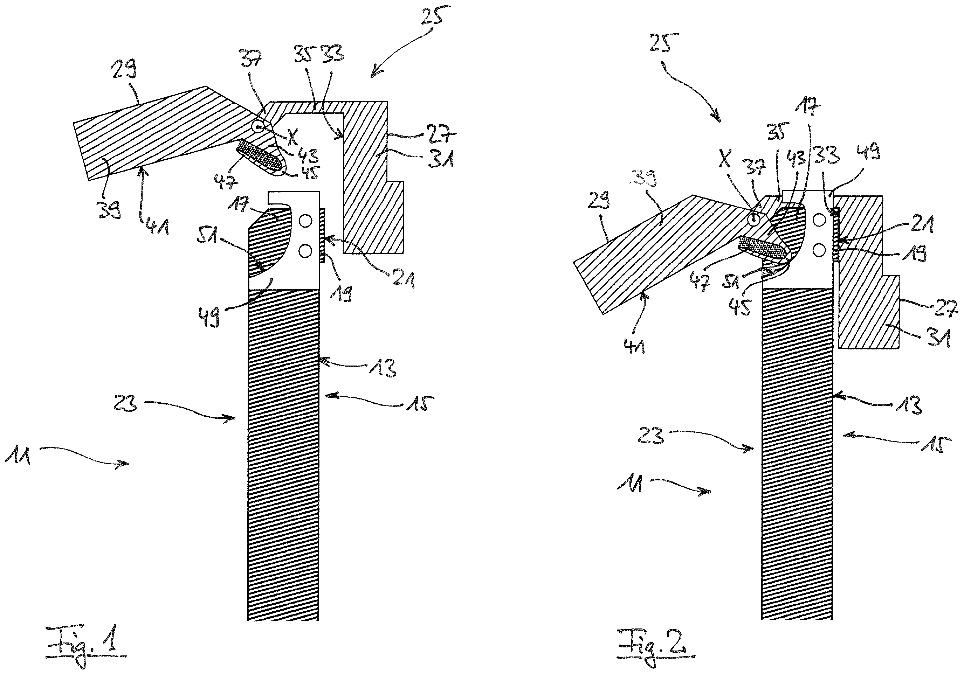

In Fig. 1 the accessory module 25 is shown detached from the cluster 11 in an open position of its back part 29 in which the accessory module 25 can be preliminarily mounted to the rim 17 of the cluster 11 by simply hanging the front part 27 of the module 25 around the rim 17. In doing so, the contact surface 33 of the front part 27 is laid against the abutment 21 on the front face 15 of the cluster 11, while the rear protrusion 35 grips over the rim 17, as shown in Fig. 2. Subsequently, this loose connection can be secured by pivoting the back part 29 further into its closed position. This is shown along the sequence of Fig. 2 to Fig. 4.

When the accessory 25 module is mounted to the cluster 11 with its front part 27, the cam guide 51 is oriented such that the course of the cam guide 51 runs circumferentially with respect to the pivot axis X, though with varying radius. In a first section of the cam guide 51 the cam member 43 cooperates with right after entering the cam guide 51, the radius of the cam guide 51 is at least essentially equal to the radius of the cam member 43 (cf. Fig. 2). The cam member 43 can therefore slide with its tip 45 along the cam guide 51.

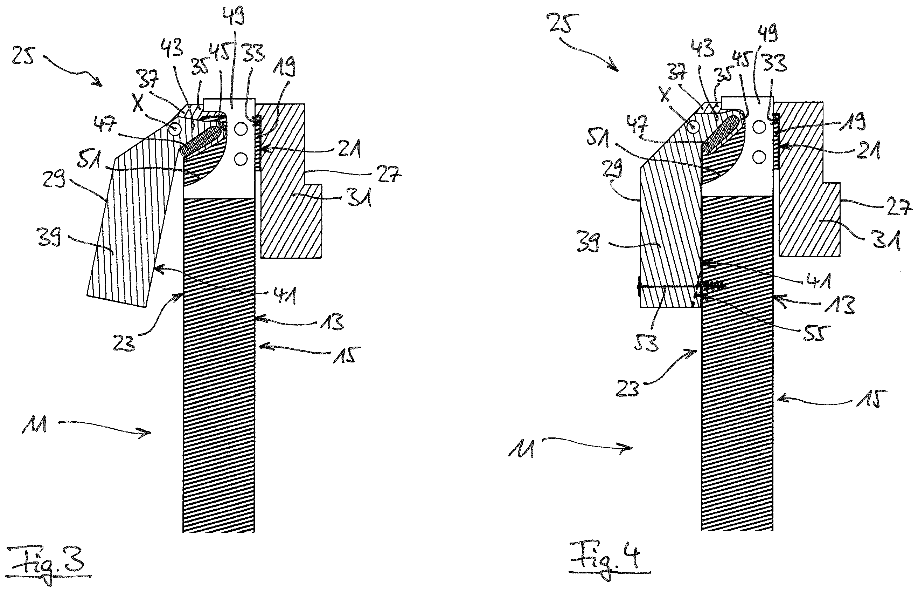

The radius of the cam guide 51 then decreases until it reaches its minimum in a radial orientation which is perpendicular to the contact surface 33 of the front part 27. This minimum radius corresponds insofar to a dead center as the cam member 43 is maximally compressed by the cam guide 51, when the back part 29 is in the corresponding position (cf. Fig. 3). This causes the cam member 43 to be forced away from the dead center on both of its sides.

After surmounting the dead center, the back part 29 is therefore forced into the closed position in which the back part 29 lies with its contact surface 41 against the back face 23 of cluster 11 (cf. Fig. 4). In this closed position, however, the radius of the cam member 43 is only partially relaxed due to the re-increased radius of the cam guide 51. Hence, there still acts a remaining force between the cam guide 51 and the cam member 43 urging the cam member 43 further in a direction beyond the closed position. Since the back part 29 already lies flat against the cluster 11, however, it cannot be pivoted further. Thus, said remaining force results in pressing the contact surface 41 of the back part 29 against the back face 23 of the cluster 11. With the front part 27 acting as a counter-support, the accessory module 25 is thereby securely mounted to the cluster 11.

Additionally, to further secure the accessory module 25 there can be fixing means 53 (only in Fig. 4) for locking the back part 29 in its closed position. Such additional fixing means 53, for example a simple screw holding the back part 29 against the back face 23 of the cluster 11 as shown, preferably only serve to lock the accessory module 25 in the closed position, while it may by itself not be suited for establishing the entire attachment.

Such a screw 53 can additionally be used to secure the attachment of the module 25 to the cluster 11 by tightening the clamping. To this purpose, the back part 29 of the module 25 can have a tightening surface 55 adjoining the contact surface 41 of the back part 29 and being slanted with respect to the contact surface 41 by, for example, about 3° such that when the contact surface 41 lies flat against the back face 23 of the cluster 11, there is a slight gap between the tightening surface 55 and the back face 23, with the screw 53 running through the tightening surface 55 and bridging said gap. (Since such a small angle is not recognizable in the Figures, for illustration purposes the tightening surface 55 is shown as a dashed line at a far greater angle in Fig. 4) Thus, by screwing-in the screw 53 the tightening surface 55 is forced against the back face 23. This results in torque around a border line between the contact surface 41 and the tightening surface 55, with the torque forcing the hinged connection (cf. X) of the front and back parts 27, 29 of the cluster 25 away from the contact surface 33 of the front part 27. This, in turn, results in a stronger contact pressure of the front part 27 of the module 25 against the abutment 21 and, hence, in an improved clamping.

Advantageously, the forces applied by the front part 27 of the module 25 to the front face 15 of the cluster 11 and by the back part 29 of the module 25 to the back face 23 of the cluster 11 act directly opposed to each other for a flat and tight assembly. Furthermore, the clamping forces act on well-defined surfaces tolerating such forces, whereas more fragile areas of the cluster 11 such as the display area 13 are not subjected to any pressure. Cooperation of the cam guide 51 and the cam member 43 not only provides a simple and effective fastening mechanism, but can also contribute to precise alignment of the accessory module 25 to the cluster 11, in particular in axial direction relative to the pivot axis X. To detach the accessory module 25 from the cluster 11 the described mounting can simply be reversed (from Fig. 4 to 1).

In this way, a gentle, precise, secure and reversible mounting of the accessory module 25 to the cluster 11 can be achieved.

### Listing of reference signs

- 11: instrument cluster
- 13: display area
- 15: front face
- 17: rim
- 19: spacing projection
- 21: abutment
- 23: back face
- 25: accessory module
- 27: front part
- 29: back part
- 31: main body
- 33: contact surface
- 35: rear protrusion
- 37: distal end
- 39: main body
- 41: contact surface
- 43: cam member
- 45: tip
- 47: damping member
- 49: guide member
- 51: cam guide
- 53: fixing means
- 55: tightening surface

- X: pivot axis

## Claims

1. Accessory module (25) for an instrument cluster (11) comprising a first part (27) and a second part (29) hingedly connected to the first part (27) so as to be pivotable relative to the first part (27) around a pivot axis (X) between an open position and a closed position,
wherein in the open position a contact surface (41) of the second part (29) is spaced apart from a contact surface (33) of the first part (27) such that the accessory module (25) can be mounted to the cluster (11) with the contact surface (33) of the first part (27) being supported against a first face (15) of the cluster (11),
wherein in the closed position the contact surface (41) of the second part (29) is forced towards the contact surface (33) of the first part (27) so as to clamp the cluster (11) in between,
the open position and the closed position are separated by a dead center, **characterized in that**
the first part (27) comprises a functional unit, in particular a camera, and the second part (29) comprises an electronic control unit for the functional unit, or vice versa.

2. Accessory module in accordance with claim 1,
wherein in the closed position of the second part (29) the contact surface (33) of the first part (27) and the contact surface (41) of the second part (29) are at least essentially aligned in parallel.

3. Accessory module in accordance with claims 1 or 2,
wherein the contact surface (33) of the first part (27) and the contact surface (41) of the second part (29) are parallel to the pivot axis (X).

4. Accessory module in accordance with any of the preceding claims,
wherein the first part (27) comprises a main body (31) and a rear protrusion (35) with the second part (29) being hingedly connected to the rear protrusion (35).

5. Accessory module in accordance with any of the preceding claims,
wherein the pivot axis (X) is situated opposite the contact surface (33) of the first part (27).

6. Accessory module in accordance with any of the preceding claims,
wherein the second part (29) comprises a tightening surface (55) adjoining the contact surface (41) of the second part (29) along a tilt line parallel to the pivot axis (X), with the tightening surface (55) being slanted with respect to said contact surface (41).

7. Accessory module in accordance with any of the preceding claims,
wherein the second part (29) comprises a main body (39) and at least one cam member (43) extending radially with respect to the pivot axis (X) from the main body (39) to engage into an associated cam guide (51).

8. Accessory module in accordance with claim 7,
wherein the second part (29) comprises two cam members (43), and wherein the first part (27) and the second part (29) are electronically connected across their hinged connection in between the two cam members (43), and/or
wherein the second part (29) comprises two cam members (43) situated at opposite sides of the second part (29) along the pivot axis (X), and/or wherein the cam member (43) is adapted to resiliently slide along the cam guide (51), when the second part (29) is pivoted between the open position and the closed position.

9. Accessory module in accordance with claim 7 or 8,
wherein the cam member (43) has a U-shaped cross-section with a bottom of the U-shape forming a radial tip (45) of the cam member (43),
in particular wherein the cam member (43) comprises a damping member (47) enclosed within the U-shape of the cam member (43).

10. Accessory module in accordance with any of claims 7 to 9,
wherein, when the accessory module (25) is mounted to the cluster (11), the cam guide (51) is adapted to run in a circumferential direction with respect to the pivot axis (X) having a varying radius with a minimal radius at a point corresponding to the dead center and a greater radius at a point corresponding to the closed position of the second part (29),
in particular wherein the cam guide (51) extends over an angular range around the pivot axis (X) of 80° to 100°, preferably of about 90°.

11. Accessory module in accordance with any of claims 7 to 10,
wherein the accessory module (25) comprises at least one guide member (49) separate from said first and second parts (27, 29), the guide member (49) being adapted to be fixedly attached to the cluster (11) prior to clamping of the accessory module (25) to the cluster (11),
wherein the cam guide (51) is formed in the guide member (49).

12. Instrument cluster assembly comprising an instrument cluster (11) and an accessory module (25) in accordance with any of claims 7 to 10 for said cluster (11),
wherein the cam guide (51) is formed in the cluster (11).

13. Instrument cluster assembly comprising an instrument cluster (11) and an accessory module (25) in accordance with any of claims 7 to 11 for said cluster (11),
wherein the first face (15) of the cluster (11) comprises a spacing projection (19) against which the contact surface (33) of the first part (27) of the accessory module (25) is supported, when the accessory module (25) is mounted to the cluster (11).

14. Instrument cluster assembly in accordance with claim 13,
wherein the cluster (11) comprises a display unit, and said first face (15) of the cluster (11) comprises a display area (13) of the display unit, wherein, when the accessory module (25) is mounted to the cluster (11), the first part (27) of the accessory module (25) is spaced apart from the display area (13) due to the spacing projection (19).

## Patentansprüche

1. Zusatzmodul (25) für ein Instrumenten-Cluster (11), das einen ersten Teil (27) und einen zweiten Teil (29) aufweist, der klappbar mit dem ersten Teil (27) verbunden ist, um relativ zu dem ersten Teil (27) um eine Schwenkachse (X) zwischen einer offenen Position und einer geschlossenen Position schwenkbar zu sein,
wobei in der offenen Position eine Kontaktfläche (41) des zweiten Teils (29) von einer Kontaktfläche (33) des ersten Teils (27) beabstandet ist derart, dass das Zusatzmodul (25) an dem Cluster (11) angebracht werden kann, wobei die Kontaktfläche (33) des ersten Teils (27) gegen eine erste Seite (15) des Clusters (11) unterstützt wird,
wobei in der geschlossenen Position die Kontaktfläche (41) des zweiten Teils (29) in Richtung der Kontaktfläche (33) des ersten Teils (27) gedrückt wird, um das Cluster (11) dazwischen zu klemmen,
die offene Position und die geschlossene Position durch einen Totpunkt getrennt sind, **dadurch gekennzeichnet, dass**
der erste Teil (27) eine funktionale Einheit aufweist, insbesondere eine Kamera, und der zweite Teil (29) eine elektronische Steuereinheit für die funktionale Einheit aufweist, oder umgekehrt.

2. Zusatzmodul gemäß Anspruch 1,
wobei in der geschlossenen Position des zweiten Teils (29) die Kontaktfläche (33) des ersten Teils (27) und die Kontaktfläche (41) des zweiten Teils (29) zumindest im Wesentlichen parallel ausgerichtet sind.

3. Zusatzmodul gemäß Anspruch 1 oder 2,
wobei die Kontaktfläche (33) des ersten Teils (27) und die Kontaktfläche (41) des zweiten Teils (29) parallel zu der Schwenkachse (X) sind.

4. Zusatzmodul gemäß einem der vorhergehenden Ansprüche,
wobei der erste Teil (27) einen Hauptkörper (31) und einen hinteren Vorsprung (35) aufweist, wobei der zweite Teil (29) klappbar mit dem hinteren Vorsprung (35) verbunden ist.

5. Zusatzmodul gemäß einem der vorhergehenden Ansprüche,
wobei die Schwenkachse (X) der Kontaktfläche (33) des ersten Teils (27) gegenüberliegt.

6. Zusatzmodul gemäß einem der vorhergehenden Ansprüche,
wobei der zweite Teil (29) eine Anziehfläche (55) aufweist, die an die Kontaktfläche (41) des zweiten Teils (29) entlang einer Kipplinie parallel zu der Schwenkachse (X) angrenzt, wobei die Anziehfläche (55) in Bezug auf die Kontaktfläche (41) geneigt ist.

7. Zusatzmodul gemäß einem der vorhergehenden Ansprüche,
wobei der zweite Teil (29) einen Hauptkörper (39) und zumindest ein Nockenelement (43) aufweist, das sich in Bezug auf die Schwenkachse (X) radial von dem Hauptkörper (39) erstreckt, um in eine zugehörige Nockenführung (51) einzugreifen.

8. Zusatzmodul gemäß Anspruch 7,
wobei der zweite Teil (29) zwei Nockenelemente (43) aufweist und wobei der erste Teil (27) und der zweite Teil (29) über ihre klappbare Verbindung zwischen den zwei Nockenelementen (43) elektronisch verbunden sind, und / oder
wobei der zweite Teil (29) zwei Nockenelemente (43) aufweist, die an gegenüberliegenden Seiten des zweiten Teils (29) entlang der Schwenkachse (X) angeordnet sind, und / oder
wobei das Nockenelement (43) ausgebildet ist, entlang der Nockenführung (51) elastisch zu gleiten, wenn der zweite Teil (29) zwischen der offenen Position und der geschlossenen Position geschwenkt wird.

9. Zusatzmodul gemäß Anspruch 7 oder 8,
wobei das Nockenelement (43) einen U-förmigen Querschnitt hat, wobei ein Boden der U-Form eine radiale Spitze (45) des Nockenelements (43) bildet,
insbesondere wobei das Nockenelement (43) ein Dämpfungselement (47) aufweist, das in der U-Form des Nockenelements (43) eingeschlossen ist.

10. Zusatzmodul gemäß einem der Ansprüche 7 bis 9,
wobei, wenn das Zusatzmodul (25) an dem Cluster (11) angebracht ist, die Nockenführung (51) ausgebildet ist, in einer Umfangsrichtung in Bezug auf die Schwenkachse (X) zu verlaufen mit einem variierenden Radius mit einem Minimumradius an einem dem Totpunkt entsprechenden Punkt und einem größeren Radius an einem Punkt, der der geschlossenen Position des zweiten Teils (29) entspricht,
insbesondere wobei sich die Nockenführung (51) über einen Winkelbereich um die Schwenkachse (X) von 80° bis 100°, vorzugsweise von etwa 90°, erstreckt.

11. Zusatzmodul gemäß einem der Ansprüche 7 bis 10,
wobei das Zusatzmodul (25) zumindest ein Führungselement (49) aufweist, das von dem ersten und dem zweiten Teil (27, 29) getrennt ist, wobei das Führungselement (49) ausgebildet ist, an dem Cluster (11) fest angebracht zu werden vor einem Festklemmen des Zusatzmoduls (25) an dem Cluster (11),
wobei die Nockenführung (51) in dem Führungselement (49) ausgebildet ist.

12. Instrumenten-Cluster-Anordnung mit einem Instrumenten-Cluster (11) und einem Zusatzmodul (25) gemäß einem der Ansprüche 7 bis 10 für das Cluster (11),
wobei die Nockenführung (51) in dem Cluster (11) ausgebildet ist.

13. Instrumenten-Cluster-Anordnung mit einem Instrumenten-Cluster (11) und einem Zusatzmodul (25) gemäß einem der Ansprüche 7 bis 11 für das Cluster (11),
wobei die erste Seite (15) des Clusters (11) einen Abstandsvorsprung (19) aufweist, gegen den die Kontaktfläche (33) des ersten Teils (27) des Zusatzmoduls (25) gestützt wird, wenn das Zusatzmodul (25) an dem Cluster (11) angebracht ist.

14. Instrumenten-Cluster-Anordnung gemäß Anspruch 13,
wobei das Cluster (11) eine Anzeigeeinheit aufweist und die erste Seite (15) des Clusters (11) einen Anzeigebereich (13) der Anzeigeeinheit aufweist,
wobei, wenn das Zusatzmodul (25) an dem Cluster (11) angebracht ist, der erste Teil (27) des Zusatzmoduls (25) aufgrund des Abstandsvorsprungs (19) von dem Anzeigebereich (13) beabstandet ist.

## Revendications

1. Module accessoire (25) pour un groupe d'instruments (11) comprenant une première partie (27) et une seconde partie (29) connectée par une charnière à la première partie (27) de manière à être capable de pivoter par rapport à la première partie (27) autour d'un axe de pivotement (X) entre une position ouverte et une position fermée,
dans lequel, dans la position ouverte, une surface de contact (41) de la seconde partie (29) est espacée d'une surface de contact (33) de la première partie (27) de telle façon que le module accessoire (25) peut être monté sur le groupe (11) avec la surface de contact (33) de la première partie (27) supportée contre une première face (15) du groupe (11),
dans lequel, dans la position fermée, la surface de contact (41) de la seconde partie (29) est forcée vers la surface de contact (33) de la première partie (27) de manière à serrer le groupe (11) entre elles,
la position ouverte et la position fermée sont séparées par une position de point mort centrale,
**caractérisé en ce que**
la première partie (27) comprend une unité fonctionnelle, en particulier une caméra, et la seconde partie (29) comprend une unité de commande électronique pour l'unité fonctionnelle, ou vice versa.

2. Module accessoire selon la revendication 1,
dans lequel, dans la position fermée de la seconde partie (29), la surface de contact (33) de la première partie (27) et la surface de contact (41) de la seconde partie (29) sont au moins essentiellement alignées en parallèle.

3. Module accessoire selon les revendications 1 ou 2,
dans lequel la surface de contact (33) de la première partie (27) et la surface de contact (41) de la seconde partie (29) sont parallèles à l'axe de pivotement (X).

4. Module accessoire selon l'une quelconque des revendications précédentes,
dans lequel la première partie (27) comprend un corps principal (31) et une projection arrière (35), la seconde partie (29) étant connectée par une charnière à la projection arrière (35).

5. Module accessoire selon l'une quelconque des revendications précédentes,
dans lequel l'axe de pivotement (X) est situé à l'opposé de la surface de contact (33) de la première partie (27).

6. Module accessoire selon l'une quelconque des revendications précédentes,
dans lequel la seconde partie (29) comprend une surface de serrage (55) adjointe à la surface de contact (41) de la seconde partie (29) le long d'une ligne de basculement parallèle à l'axe de pivotement (X), la surface de serrage (55) étant en oblique par rapport à ladite surface de contact (41).

7. Module accessoire selon l'une quelconque des revendications précédentes,
dans lequel la seconde partie (29) comprend un corps principal (39) et au moins un élément formant came (43) s'étendant radialement par rapport à l'axe de pivotement (X) depuis le corps principal (39) pour s'engager dans un guide de came associé (51).

8. Module accessoire selon la revendication 7,
dans lequel la seconde partie (29) comprend deux éléments formant came (43), et
dans lequel la première partie (27) et la seconde partie (29) sont connectées électroniquement à travers leur connexion par charnière entre les deux éléments formant came (43), et/ou
dans lequel la seconde partie (29) comprend deux éléments formant came (43) situés à des côtés opposés de la seconde partie (29) le long de l'axe de pivotement (X), et/ou
dans lequel l'élément formant came (43) est adapté à coulisser de manière élastique le long du guide de came (51) quand la seconde partie (29) est pivotée entre la position ouverte et la position fermée.

9. Module accessoire selon la revendication 7 ou 8,
dans lequel l'élément formant came (43) a une section transversale en forme de U, de sorte qu'un fond de la forme en U forme un embout radial (45) de l'élément formant came (43), en particulier dans lequel l'élément formant came (43) comprend un élément d'amortissement (47) enfermé à l'intérieur de la forme en U de l'élément formant came (43).

10. Module accessoire selon l'une quelconque des revendications 7 à 9, dans lequel, quand le module accessoire (25) est monté sur le groupe (11), le guide de came (51) est adapté à se déplacer dans une direction circonférentielle par rapport à l'axe de pivotement (X) ayant un rayon variable avec un rayon minimum à un point correspondant à la position de point mort centrale et un rayon plus grand au niveau d'un point correspondant à la position fermée de la seconde partie (29),
en particulier dans lequel le guide de came (51) s'étend sur une plage angulaire autour de l'axe de pivotement (X) de 80° à 100°, de préférence environ 90°.

11. Module accessoire selon l'une quelconque des revendications 7 à 10, dans lequel le module accessoire (25) comprend au moins un élément de guidage (49) séparé de ladite première et de ladite seconde partie (27, 29), l'élément de guidage (49) étant adapté à être attaché de manière fixe sur le groupe (11) avant de serrer le module accessoire (25) sur le groupe (11), dans lequel le guide de came (51) est formé dans l'élément de guidage (49).

12. Assemblage formant groupe d'instruments comprenant un groupe d'instruments (11) et un module accessoire (25) selon l'une quelconque des revendications 7 à 10 pour ledit groupe (11),
dans lequel le guide de came (51) est formé dans le groupe (11).

13. Assemblage formant groupe d'instruments comprenant un groupe d'instruments (11) et un module accessoire (25) selon l'une quelconque des revendications 7 à 11 pour ledit groupe (11),
dans lequel la première face (15) du groupe (11) comprend une projection d'espacement (19) contre laquelle la surface de contact (33) de la première partie (27) du module accessoire (25) est supportée quand le module accessoire (25) est monté sur le groupe (11).

14. Assemblage formant groupe d'instruments selon la revendication 13, dans lequel le groupe (11) comprend une unité d'affichage, et ladite face (15) du groupe (11) comprend une zone d'affichage (13) de l'unité d'affichage, dans lequel, quand le module accessoire (25) est monté sur le groupe (11) la première partie (27) du module accessoire (25) est espacée de la zone d'affichage (13) en raison de la projection d'espacement (19).
